# EUROPÄISCHE PATENTSCHRIFT

(11) **EP 0 761 461 B1**
(45) Veröffentlichungstag und Bekanntmachung des Hinweises auf die Patenterteilung: **19.05.1999**
(21) Anmeldenummer: 96113240.4
(22) Anmeldetag: 19.08.1996
(51) Int. Cl.: B41M 5/36

(54) **Verfahren zur Beschriftung von Formkörpern**
Method for marking moulded bodies
Méthode pour le marquage d'objets formés

(30) Priorität: 26.08.1995 DE 19531490
(43) Veröffentlichungstag der Anmeldung: 12.03.1997
(73) Patentinhaber: BASF AKTIENGESELLSCHAFT, 67056 Ludwigshafen (DE)
(72) Erfinder: Mühlbach, Klaus, Dr., 67269 Grünstadt (DE); Zeltner, Doris, Dr., 67354 Römerberg (DE); Plachetta, Christoph, Dr., 67117 Limburgerhof (DE); Welz, Martin, 67098 Bad Dürkheim (DE)

(56) Entgegenhaltungen:
- EP-A- 0 233 146
- EP-A- 0 400 305
- EP-A- 0 413 664
- EP-A- 0 536 587
- EP-A- 0 542 115
- EP-A- 0 708 147
- EP-A- 0 720 921
- US-A- 5 300 350

## Beschreibung

Die vorliegende Erfindung betrifft ein verbessertes Verfahren zur Beschriftung von thermoplastischen oder duroplastischen Polymeren mittels energiereicher Strahlung.

Kunststoffe können durch Druckverfahren beschriftet werden. In den letzten Jahren hat sich jedoch die Laserbeschriftung weitgehend durchgesetzt. Die Vorteile liegen in der einfach, schnell und präzise durchführbaren, berührungslosen (weder mechanische Belastung noch Verschmutzung des Werkstücks), flexiblen (rechnergesteuert), sauberen und chemikalienfreien Bearbeitung. Laseranlagen lassen sich problemlos in automatische Fertigungsstraßen integrieren; Kunststoff-Fertigteile können individuell beschriftet werden, weil ein Layout-Wechsel rechnergestützt einfach und schnell möglich ist. Die Beschriftung erfolgt berührungslos auch an schwer zugänglichen Stellen. Gegenüber konventionellen Bedrucktechniken ergeben sich also erhebliche Vorteile.

Die wichtigste Charakterisierungsgröße der erzielten Beschriftung ist die Lesbarkeit, die mit dem Kontrast quantifiziert werden kann. Neben hohem Kontrast sind ausreichende Verfärbungstiefe und eine möglichst glatte Oberfläche gefordert. Die Schrift soll abriebfest und chemikalienbeständig sein.

Damit auf einem Kunststoff-Formkörper eine hochwertige Markierung entsteht, muß die Absorption von Laserlicht eine Farbumschlagreaktion bewirken. Je nach Wellenlänge, eingestrahlter Leistung, Pulslänge etc. sind jeweils unterschiedliche Wechselwirkungen zwischen Laserlicht und Kunststoff dominierend und man unterscheidet daher eine Reihe verschiedener laserinduzierter Mechanismen, die zu einer dauerhaften Markierung führen: Thermochemische Reaktion, Karbonisierung der Oberfläche, Aufschmelzen, Umschmelzen, Verdampfen, Sublimation, Gravieren, Verfärbung, Aufschäumen, photochemische Reaktion, Ablation (Materialabtrag), Ausbleichen von Farbstoffen, Entfernung einer Überzugsschicht.

Beim Laserbeschriften unterscheidet man zwei Verfahren, das Masken(Projektions-) und das Strahlablenkungsbeschriften (Scannen des Laserstrahls). Beim Maskenbeschriften werden gepulste Laser eingesetzt. Ein Laserstrahl mit hinreichend großer Apertur beleuchtet eine Maske, die die gesamte zu übertragende Information enthält. Die Maske wird mit einer Linse auf die zu beschriftende Oberfläche abgebildet, die Information kann mit einem einzigen Laserpuls auf das Werkstück aufgebracht werden. Bei großen Bildern kann die Maske mit mehreren Pulsen abgescannt werden. Die maximale Größe des Beschriftungsfeldes wird durch die notwendige Energiedichte beschränkt. Das Projektionsverfahren erlaubt damit schnelle Beschriftungen; da eine Maske erstellt werden muß, ist es jedoch nicht so flexibel. Bei der Strahlablenkungsbeschriftung wird der Laserstrahl über zwei bewegliche Spiegel und eine Planfeldlinse auf das zu beschriftende Werkstück gelenkt.

Zum Einsatz kommen bisher überwiegend der CO₂-Laser (10.6 µm Wellenlänge) und besonders der Nd:YAG-Laser (1.06 µm) bzw. der frequenzverdoppelte Nd:YAG-Laser (532 nm). Oft ist allerdings der Absorptionskoeffizient der zu bearbeitenden Kunststoffe bei diesen Wellenlängen nicht hoch genug, um einen Farbumschlag im polymeren Material zu induzieren. Daher werden üblicherweise dem Kunststoff bei dessen Herstellung geeignete Hilfs- und Füllstoffe zugesetzt, die bei der verwendeten Wellenlänge stark absorbieren und die aufgenommene Energie an die umgebende Polymermatrix übertragen (z.B. Zusatz sensibilisierender Farbstoffe in Form von Pigmenten, Zusatz von toxischen Arsen- oder Cd-Verbindungen, Zugabe geeigneter Monomere bei der Copolymerisation, Beschichten des Substrats mit speziellen Lack- und Farbfilmen, Tinten etc.) Bekannt ist die Einlagerung von Ruß (DE-A 2936926) oder Knochenkohle (EP-A A522370) oder von Antimontrioxid in thermoplastische Elastomere. Spezielle Kunststoffadditive mit hohem Absorptionsvermögen, insbesondere für die Wellenlänge des Nd:YAG-Lasers, ermöglichen Markierungen mit hohem Kontrast, guter Konturenschärfe und guter Abriebfestigkeit (C. Herkt-Maetzky, Kunststoffe 81 (1991) 4). Weitere Verfahren arbeiten mit strahlungsempfindlichen ausbleichbaren Zusatzstoffen (und evtl. zusätzlichen, weniger strahlungsempfindlichen nicht verfärbbaren Verbindungen). Durch Bestrahlung werden dann die strahlungsempfindlichen Farbstoffe zerstört und an den bestrahlten Stellen verbleibt dann die Hintergrund- oder Komplementärfarbe der Polymermatrix und es entsteht eine visuelle bunte Kontrastmarkierung. Solche Farbumschläge führen zu guten Kontrasten (EP 327508). Kunststoffe, die handelsübliche farbige Pigmente enthalten, lassen sich mit dem frequenzverdoppelten Nd:YAG-Laser teilweise beschriften, da eine große Zahl von Pigmenten und Farbstoffen bei 532 nm absorbiert. Die Pigmente werden ausgebleicht mit der Folge eines Farbumschlags. Durch Zusatz von modifizierten Glimmerpigmenten können Formmassen hergestellt werden, die mit dem CO₂-Laser beschriftbar sind (C. Herkt-Maetzky, Kunststoffe 81 (1991) 4). Beschrieben wurde auch ein Verfahren, bei dem auf einem Trägermaterial Pigmente aufgebracht sind, die mit Hilfe des Lasers auf thermischem Wege in die Oberfläche eingeschmolzen werden (EP-A 419 377).

In der DE-A 4133124 werden mit Laserlicht beschriftbare hochpolymere Materialien beschrieben, welche als Additiv anorganische Nebengruppenmetallsalze enthalten. Aus der EP-A 592942 sind PA-Massen bekannt, die Eisenoxidpigmente als Füllstoffe enthalten.

Aus der EP- A- 0720921 (Stand der Technik gemäß Art.54(3) EPÜ) ist ein Verfahren zur Herstellung von kontrastreich beschrifteten, aus Silicon bestehenden Gegenständen, bei welchem ein Zusatzstoffe enthaltendes Silicon mit Laserlicht bestrahlt wird. Unter den aufgelisteten Zusatzstoffen werden Eisenoxidschwarz und anorganische Kupfersalze erwähnt.

Kunststoffe zu modifizieren ist aufwendig. Die zugesetzten Füllstoffe können die Materialeigenschaften des Kunststoffes negativ beeinflussen. So können Additive zum Verbessern der Beschriftbarkeit häufig nicht beabsichtigte Nebenwirkungen wie verminderte Festigkeit des Werkstoffs oder unerwünschte Farben beim Einsatz von Pigmenten zur Folge haben. Daher wurde nach speziellen lasersensiblen Additiven gesucht, die, in den Kunststoff eingearbeitet, andere anwendungstechnische Werkstoffeigenschaften nicht beeinflussen. Die Sensibilisierung erfolgt jedoch oft nur für eine Wellenlänge, auf die das System optimiert wurde.

Aufgabe der vorliegenden Erfindung war es daher, ein Verfahren zur Beschriftung von Formkörpern auf der Basis von thermoplastischen Kunststoffen zur Verfügung zu stellen, welches die vorstehend beschriebenen Nachteile nicht aufweist und die Erstellung dauerhafter kontrastreicher Schriften auf technisch einfach zu realisierende Weise ermöglicht.

Diese Aufgabe wird erfindungsgemäß durch ein Verfahren gemäß Oberbegriff des Anspruchs 1 gelöst, wobei man als Additiv zur Verbesserung der Beschriftbarkeit ein anorganisches Schwarzpigment auf der Basis von Eisenoxid zusammen mit einem anorganischen Nebengruppenmetallsalz einsetzt.

Die beim erfindungsgemäßen Verfahren eingesetzte energiereiche Strahlung hat im allgemeinen eine Wellenlänge im Bereich von 150 bis 1500, vorzugsweise im Bereich von 150 - 1100 nm.

Beispielsweise seien hier CO₂-Laser (10,6 µm) und Nd:YAG-Laser (1064 bzw. 532 nm) oder UV-Laser erwähnt, wobei letztere insbesondere Excimerlaser mit folgenden Wellenlängen sind:
- F₂-Excimerlaser: 157 nm
- ArF-Excimerlaser: 193 nm
- KrCl-Excimerlaser: 222 nm
- KrF-Excimerlaser: 248 nm
- XeCl-Excimerlaser: 308 nm
- XeF-Excimerlaser: 351 nm
sowie frequenzvervielfachte Nd:YAG-Laser mit Wellenlängen von 355 nm (frequenzverdreifacht) oder 266 nm (frequenzvervierfacht).

Besonders bevorzugt werden Nd:YAG-Laser (1064 bzw. 532 nm), KrF-Laser (248 nm) und XeCl-Laser (308 nm).

Die Energiedichten der eingesetzten Laser liegen im allgemeinen im Bereich von 0,3 mJ/cm² bis 50 J/cm² vorzugsweise 0,5 mJ/cm² bis 20 J/cm² und besonders bevorzugt 1 mJ/cm² bis 10 J/cm².

Bei der Verwendung von gepulsten Lasern liegt die Pulsfrequenz im allgemeinen im Bereich von 0,1 bis 10 000, vorzugsweise von 0,5 bis 5000 und insbesondere von 1 bis 1000 Hz und die Pulslängen (Zeitdauer der einzelnen Pulse) im Bereich von 0,1 bis 1000, vorzugsweise von 0,5 bis 500 und besonders bevorzugt von 1 bis 100 ns.

Abhängig von der Energiedichte des verwendeten Lasers, der Pulslänge und der Art des bestrahlten Formkörpers reichen zur Erzielung guter Beschriftungen im allgemeinen 1 bis 20000, vorzugsweise 1 bis 5000 und insbesondere 1 bis 3000 Pulse aus.

Entsprechende Laser, die im erfindungsgemäßen Verfahren eingesetzt werden können, sind kommerziell erhältlich.

Excimerlaser sind besonders gut geeignet für die Projektion (Maskenverfahren). Es ist aber auch möglich, den Strahl mit beweglichen Spiegeln zu führen (Scannen). Mit homogenem Strahlquerschnitt ist die Bestrahlung einer Maske von etwa 2 cm x 2 cm möglich. Durch Verwendung geeigneter Optiken kann der Strahlquerschnitt aber auch weiter aufgeweitet werden.

Mit Excimerlasern kann schon mit nur einem Puls gut beschriftet werden (bei entsprechend angepaßter Energiedichte), so daß im Vergleich zu Nd:YAG-Lasern auch sehr schnelle Beschriftungen herstellbar sind. Bei der Serienfertigung von Spritzgußteilen z.B. muß die Beschriftungszeit kleiner als die Spritzgußzeit (< ca. 30 s) geteilt durch die Anzahl der Formnester sein. Daraus folgt, daß in diesen Fällen die spritzgegossenen Formen mit hohen Geschwindigkeiten beschriftet werden müssen. Solche hohen Geschwindigkeiten sind mit dem Nd:YAG-Laser teilweise nicht möglich, sondern nur mit 1-Puls-Maskenbeschuß erreichbar.

Noch höhere Anforderungen an die Beschriftungsgeschwindigkeit stellen kontinuierliche Prozesse wie z.B. die Profilextrusion mit Materialgeschwindigkeiten von mehreren m/s. Hierfür reichen selbst hohe Schreibgeschwindigkeiten von Nd:YAG-Lasern nicht mehr aus.

Als Strahlungsquellen können weiterhin auch kontinuierliche UV-Lampen wie Hg-, Xe- oder Deuteriumlampen eingesetzt werden. Auch derartige Produkte sind kommerziell erhältlich.

Nach dem erfindungsgemäßen Verfahren werden Formkörper auf der Basis von duroplastischen oder thermoplastischen Polymeren oder Mischungen dieser Polymeren mit bis zu 70 Gew.-%, bezogen auf das Gesamtgewicht der Komponenten, weiterer Zusatzstoffe und Verarbeitungshilfsmittel mittels energiereiche Strahlung beschriftet.

Grundsätzlich zeigt sich der vorteilhafte Effekt bei Kunststoffen jeglicher Art. Eine Aufzählung geeigneter Thermoplaste und Duroplaste findet sich beispielsweise im Kunststoff-Taschenbuch (Hrsg. Saechtling), Auflage 1989, wo auch Bezugsquellen genannt sind. Verfahren zur Herstellung solcher thermoplastischer oder duroplastischer Kunststoffe sind dem Fachmann an sich bekannt. Nachstehend seien einige bevorzugte Kunststoffarten etwas näher erläutert.

### 1. Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 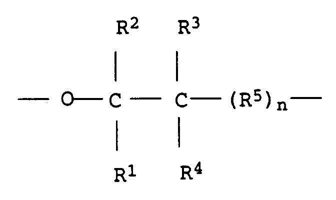 enthalten, wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 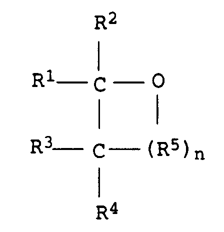 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 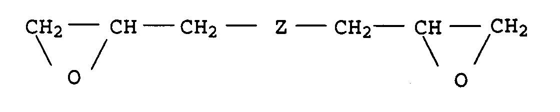 wobei Z eine chemische Bindung, -O-, -ORO- (R= C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol,Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

### 2. Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2, 2-Di (4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 23°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1) bei 23°C).

### 3. Polyolefine

Hier sind ganz allgemein Polyethylen und Polypropylen sowie Copolymerisate auf der Basis von Ethylen oder Propylen, ggf. auch mit höheren α-Olefinen zu nennen. Entsprechende Produkte sind unter den Handelsnamen Lupolen® bzw. Novolen® von der BASF Aktiengesellschaft erhältlich.

### 4. Polymethacrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von der BASF Aktiengesellschaft oder Plexiglas® von Röhm GmbH erhältlich sind.

### 5. Polyamide

Bevorzugt sind ganz allgemein Polyamide mit aliphatischem teilkristallinem oder teilaromatischem sowie amorphem Aufbau jeglicher Art und deren Blends. Entsprechende Produkte sind unter dem Handelsnamen Ultramid® von der BASF AG erhältlich.

Als weitere geeignete Kunststoffe seien ABS, ASA, SAN-Polymere sowie hochtemperaturbeständige Kunststoffe wie Polyphenylenether, Polyarylenethersulfone, -ketone und Polyimide genannt. Selbstverständlich können auch Mischungen (Blends) derartiger Polymere eingesetzt werden.

Es versteht sich, daß auch Mischungen thermoplastischer oder duroplastischer Kunststoffe eingesetzt werden können.

Der Gewichtsanteil an thermoplastischen oder duroplastischen Kunststoffen liegt im allgemeinen im Bereich von 20 bis 99,99; vorzugsweise 45 bis 99,98 und insbesondere von 90 bis 99,98 Gew.-%.

Darüber hinaus können die Kunststoffe 0 bis 70, vorzugsweise 0 bis 50 Gew.-% üblicher Zusatzstoffe und Verarbeitungshilfsmittel enthalten. Als Beispiele seien faser- oder teilchenförmige Füllstoffe wie Glasfasern oder mineralische Füllstoffe wie Wollastonit, kautschukelastische Polymere (z.B. EP-, EPDM-Kautschuke, TPU's, Kern-Schale-Polymere), UV-Stabilisatoren, Keimbildungsmittel, Flammschutzmittel, Weichmacher, Oxidationsverzögerer und Wärmestabilisatoren genannt.

Als Additiv zur Verbesserung der Beschriftbarkeit enthalten die nach dem erfindungsgemäßen Verfahren zu beschriftenden Formkörper ein anorganisches Schwarzpigment auf der Basis von Eisenoxid als wesentlichen Bestandteil in Mengen von 0,01 bis 4, vorzugsweise 0,02 bis 3 und insbesondere 0,02 bis 1 Gew.-%. Bevorzugte Eisenoxidpigmente weisen eine Spinell- oder inverse Spinellstruktur auf.

Die Elementarzelle des Spinellgitters enthält 32 Sauerstoffatome, die eine annähernd kubisch dichteste Kugelpackung bilden. In der normalen Spinellstruktur befinden sich 8 Me²⁺-Ionen jeweils im Mittelpunkt von aus 4 O²-Ionen gebildeten Oktaedern (Oktaeder-Lagen). Bei der sogenannten inversen Spinellstruktur ist die Verteilung der Kationen eine andere. Die Hälfte der Me³⁺-Ionen besetzt die Tetraederlagen, die andere Hälfte ist zusammen mit den Me²⁺-Ionen auf die Oktaederlagen verteilt. Auch Übergänge zwischen den beiden Strukturen mit nicht geordneter Verteilung der Kationen sind möglich. Man kann die normale und die inverse Struktur durch die Formeln Me²⁺[Me₂³⁺]O₄, und Me³⁺[Me²⁺Me³⁺]O₄, kennzeichnen. Unter den Ferriten findet man Vertreter beider Strukturen: Der Zinkferrit besitzt die normale Struktur Zn[Fe₂]O₄, im Magnesiumferrit dagegen sind die Kationen ganz überwiegend wie im inversen Spinell verteilt: Fe³⁺[Mg²⁺Fe³⁺]O₄.

Als Beispiele für zweiwertige Metalle seien Mg, Fe(II), Zn, Mn, Co, Ni, Cu, Cd genannt, als dreiwertige Metalle seien Al, Fe(III), V, Cr oder Titan genannt. Bevorzugte Eisenoxidpigmente sind Magnetit (inverser Spinell Fe^{3+[}Fe²⁺Fe³⁺]O₄), Cr³⁺[Cu^{II}, Fe^{II}]O₄ und Mischphasenpigmente aus Fe₂O₃/Mn₂O₃.

Bei diesen Mischphasenpigmenten werden Gastionen in bestimmte Wirtsgitter eingebaut, wodurch sich je nach wahl der Gastionen Farbeffekte gezielt einstellen lassen. Die Grundstruktur des Wirtsgitters wird durch den Einbau nicht verändert. Lediglich die Abmessung der Elementarzelle - die Gitterkonstanten - werden durch den Einbau der Fremdionen verändert. Für die Herstellung stabiler Pigmente ist es sinnvoll, von Strukturen auszugehen, die eine besonders große Stabilität aufweisen. Hierzu gehört insbesondere die Spinellstruktur. Durch die partielle oder vollständige Substitution der Metallionen im Spinell durch farbgebende Gastionen wie Chrom und Kupfer können lichtechte Schwarzpigmente erhalten werden.

Bei der Herstellung der Mischphasenpigmente geht man von den oxidischen oder hydroxidischen Verbindungen der Komponenten aus, die ggf. intermediär durch Fällung mit Alkalien aus der entsprechenden Metallsalzlösung hergestellt werden. Die innige Mischung der Rohstoffe erfolgt in der Naßphase. Die eigentliche Bildung der Mischphase ist eine Festkörperreaktion und erfordert hierfür hohe Temperaturen. Daraus resultiert die für die Einfärbung aller Kunststoffe mehr als ausreichende Temperaturbeständigkeit dieser Pigmente. Die Glühung kann kontinuierlich oder diskontinuierlich erfolgen.

Anschließend müssen die Produkte gewaschen und intensiv naß gemahlen werden, da die bei den hohen Temperaturen ablaufende Festkörperreaktion in erhöhtem Maß zur Bildung von Aggregaten und Agglomeraten führen. Die Trocknung in für Pigmente üblichen Trocknern und die Schlußmahlung zur Zerstörung der Trocknungsagglomerate schließen sich an.

Andere Verfahren zur Herstellung von Eisenoxidpigmenten sind dem Fachmann bekannt; z.B. aus Römpp Chemie Lexikon, 9. Auflage, Georg Thieme Verlag Stuttgart, New York 1994, S. 1096.

Die häufigste Herstellmethode ist das sogenannte Anilinverfahren. Bei der Reduktion von Nitrobenzol zu Anilin in sauerer Lösung wird als Reduktionsmittel Gußeisen in Form feiner Späne verwendet. Dieses wird dabei zu Eisenoxid oxidiert, das normalerweise mit schwarzgrauer Farbe anfällt. Durch besondere Prozeßführung und geeignete Zusätze wie Eisen(II)-salze und Aluminiumsalze werden farbstarke Eisenoxidschwarzschlämme erhalten. Diese werden nach dem Waschen und Filtrieren zu Eisenoxidschwarz aufgearbeitet.

Um die optischen Eigenschaften des Pigmentes optimal zu entwickeln, ist vorzugsweise ein eng begrenzter Primärteilchengrößenbereich einzuhalten, z.B. für Fe₃O₄ zwischen 0,1 und 1 µm. Die Teilchengröße geeigneter Schwarzpigmente wird durch sogenanntes Mikronisieren, d. h. eine Spezialmahlung mit überhitztem Wasserdampf, eingestellt. Dabei wird eine relativ homogene Teilchengrößenverteilung erreicht.

Die Primärteilchengröße und deren Verteilung wird üblicherweise durch Siebanalyse, Sedimentationsanalyse und bekannte Zählverfahren (z.B. durch Elektronenmikroskopie) bestimmt.

Als bevorzugte im Handel erhältliche Schwarzpigmente seien Pigment Black 11, Echtschwarz 100 und Bayferrox® Schwarztypen (Firma Bayer AG) genannt.

In dem erfindungsgemäßen Verfahren setzt man als Additiv (besserer Schriftkontrast) zusätzlich ein anorganisches Nebengruppenmetallsalz ein in Mengen von 0,005 bis 5 Gew.-%, vorzugsweise 0,01 bis 2 Gew.-% und insbesondere von 0,02 bis 1 Gew.-%. Unter einem Nebengruppenmetall versteht man im allgemeinen Elemente, die in ihrer äußeren Elektronenschale d-Elektronen aufweisen (d¹-d¹⁰).

Von den anorganischen Nebengruppenmetallsalzen haben sich diejenigen als besonders geeignet erwiesen, bei denen das Nebengruppenmetall eine Elektronenkonfiguration d⁶ bis d¹⁰ aufweist, bevorzugt d⁹, also Cu, Ag, Au, insbesondere Cu und Ag. Weiterhin bevorzugt als anorganische Nebengruppenmetallsalze sind die Halogenide, Pseudohalogenide und Sulfate. Zu den Pseudohalogeniden zählen lineare Anionen wie Cyanid, Fulminat, Cyanat, Thiocyanat und Azid und nichtlineare Anionen wie Dicyanamid, Dicyanphosphid, Tricyanmethanid und Nitrosodicyanmethanid. Als besonders bevorzugt sind die Chloride, Bromide, Thiocyanate und Sulfate zu nennen.

Neben Eisenoxidpigmenten und Übergangsmetallsalzen kommen auch weitere Additive, die üblicherweise zur Beschriftung von Formkörpern mit Lasern eingesetzt werden, zur Anwendung; erforderlich ist die Zugabe weiterer Additive jedoch nicht.

### Beispiele

### Beispiele 1 bis 5 (Referenz)

Es wurden Spritzgußkörper (Musterplatten) aus einem thermoplastischen Polyester (Polybutylenterephthalat mit einer Viskositätszahl von 130 ml/g; gemessen in einem 1:1 Gemisch aus o-Dichlorbenzol/Phenol bei 23°C gemäß DIN 1628; Ultradur® B 4500 der BASF AG) mit nachstehenden Arten von Pigmenten hergestellt. Die Menge betrug jeweils 0,029 Gew.-% Pigment, bezogen auf 100 Gew.-% Thermoplast und Pigment. Die Pigmente wurden bei der üblichen Konfektionierung in einem Zweiwellenextruder zur Thermoplastschmelze zudosiert. Die Musterplatten wurden mit einem Nd-YAG-Laser bei einer Wellenlänge von 1064 nm, Lampenstrom: 10 A mit einer Schreibgeschwindigkeit von 600 mm/s beschriftet.

### Beurteilung der Schriftqualität:

Die Schrift wird üblicherweise nach den vier wichtigsten Eigenschaften beurteilt: Kontrast, Gleichmäßigkeit, Konturenschärfe und Oberflächengüte. In der folgenden Tabelle 1 wurde der Kontrast mit einem Lumiancemeter nach dem Schulnotensystem beurteilt (1: sehr gut bis 6: sehr schlecht). Der Kontrast ist das Verhältnis zwischen den Leuchtdichten von Untergrund und Schrift.

### Pigmente

- Beispiel 1:: anorganisches Schwarzpigment: Fe^{III}[Fe^{II}Fe^{III}]O₄ (Eisenoxidschwarz der Firma Bayer AG, coloristische Bezeichnung nach dem Color Index C.I.: Pigment Black 11)
- Beispiel 2:: anorganisches Schwarzpigment: Cr^{III}[Cu^{II}Fe^{III}]O₄ (Echtschwarz 100 der Firma Bayer AG; C.I. Pigment Black 23)
- Beispiel 3:: Mischphasenpigment aus Fe₂O₃ und Mn₂O₃ mit einem Eisenoxidanteil von 58 % gemäß DIN 55 913 (Bayferrox® 303 T der Firma Bayer AG)
- Vergleichsbeispiel 4:: Ruß mit einem mittleren Teilchendurchmesser von 95 nm (Black Pearls 900 der Firma Cabot)
- Vergleichsbeispiel 5:: Knochenkohle gemäß Beispiel 1 der EP-A 522370

Die Ergebnisse der Messungen sind der Tabelle 1 zu entnehmen:

**Tabelle 1**

| Beispiel | Kontrast |
|---|---|
| 1 | 3 |
| 2 | 3 |
| 3 | 3+ |
| 4* | 4 |
| 5* | 4- |

| | |
|---|---|
| * zum Vergleich | |

### Beispiele 6 bis 9 (Erfindung)

### Beispiel 6

Gemäß Beispiel 1 wurden Musterplatten aus
- 99,392 Gew.-%: Polybutylenterephthalat mit
- 0,069 Gew.-%: Eisenoxidpigment gemäß Beispiel 3
- 0,049 Gew.-%: CuSCN (Kupferrhodanid)
- 0,49 Gew.-%: Titandioxid
hergestellt und beschriftet und der Kontrast- wie oben angegebengemesssen und beurteilt.

### Beispiel 7

Gemäß Beispiel 6 wurden Musterplatten hergestellt, wobei jedoch als Polymermatrix ein Polyamid 6 eingesetzt wurde (VZ: 145 ml/g, gemessen gemäß ISO 307 als 0,5 %ige Lösung in 96 gew.-%iger Schwefelsäure bei 23°C, Ultramid ^{(R)} B3 der BASF AG).

### Beispiel 8

Gemäß Beispiel 6 wurden Musterplatten hergestellt, wobei jedoch als Polymermatrix ein Polyoxymethylencopolymerisat aus 97,3 Gew.-% Trioxan mit 2,7 Gew.-% Butandiolformal mit einem MVR von 7,5 ml/10' bei 190°C und 2,16 kg Belastung gemäß ISO 1133, Ultraform ^{(R)}N 2320 03 der BASF AG eingesetzt wurde.

### Vergleichsbeispiel 9

gemäß Beispiel 6 wurden Musterplatten hergestellt, wobei anstatt des Eisenoxidpigmentes aus Beispiel 3 die gleiche Menge Ruß (Black Pearls gemäß Vergleichsbeispiel 4) eingesetzt wurde.

Die Ergebnisse der Beschriftungen sind der Tabelle 2 zu entnehmen.

**Tabelle 2**

| Beispiel | Kontrast |
|---|---|
| 6 | 2 |
| 7 | 3 |
| 8 | 3+ |
| 9* | 4+ |

| | |
|---|---|
| * zum Vergleich | |

Die Versuchsergebnisse aus Tabelle 2 zeigen, daß durch den Zusatz des Übergangsmetallsalzes (CuSCN) der Kontrast in erheblichem Maße verbessert wurde.

## Patentansprüche

1. Verfahren zur Beschriftung von Formkörpern auf der Basis von duroplastischen oder thermoplastischen Polymeren oder Mischungen dieser Polymeren mit bis zu 70 Gew.-%, bezogen auf das Gesamtgewicht der Komponenten, weiteren Zusatzstoffen und Verarbeitungshilfsmitteln, mittels energiereicher Strahlung, dadurch gekennzeichnet, daß man als Additiv zur Verbesserung der Beschriftbarkeit ein anorganisches Schwarzpigment auf der Basis von Eisenoxid und zusätzlich ein anorganisches Nebengruppenmetallsalz einsetzt.

2. Verfahren nach Anspruch 1, dadurch gekennzeichnet, daß als thermoplastisches Polymer ein Polyoxymethylenhomo- oder copolymerisat, Polycarbonat, Polyester, Polyamid, Polyolefin, Polymethylmethacrylat, Acrylnitril-Butadien- Styrolpolymerisat (ABS), Acrylester-Butadien-Acrylnitril (ASA), Polyphenylenether, Polyarylenethersulfone, Polyarylenetherketone oder Polyimide oder deren Mischungen eingesetzt wird.

3. Verfahren nach den Ansprüchen 1 oder 2, dadurch gekennzeichnet, daß Eisenoxidpigmente mit Spinell- oder inverser Spinellstruktur oder deren Mischungen eingesetzt werden.

4. Verfahren nach den Ansprüchen 1 bis 3, dadurch gekennzeichnet, daß als anorganisches Nebengruppenmetallsalz Salze des Kupfers, Silbers oder Goldes eingesetzt werden.

5. Verfahren nach den Ansprüchen 1 bis 4, dadurch gekennzeichnet, daß als Quelle der energiereichen Strahlung ein Nd: YAG-Laser mit einer Wellenlange von 1064 nm, der nach dem Ablenkverfahren arbeitet, eingesetzt wird.

6. Verfahren nach den Ansprüchen 1 bis 4, dadurch gekennzeichnet, daß als Quelle der energiereichen Strahlung ein Nd: YAG Laser mit Frequenzverdoppelung mit einer Wellenlänge von 532 nm eingesetzt wird.

7. Verfahren nach den Ansprüchen 1 bis 4, dadurch gekennzeichnet, als Quelle der energiereichen Strahlung ein Excimerlaser eingesetzt wird, der nach dem Maskenschußverfahren arbeitet.

8. Beschriftete Formkörper, Halbzeuge und Fertigteile, erhältlich nach dem Verfahren gemäß den Ansprüchen 1 bis 7.

## Claims

1. A process for the inscription of moldings based on thermosetting or thermoplastic polymers or mixtures of these polymers with up to 70% by weight, based on the total weight of the components, of further additives and processing auxiliaries, by means of high-energy radiation, wherein an inorganic black pigment based on iron oxide and in addition an inorganic sub-group metal salt are employed as additive for improving the inscribability.

2. A process as claimed in claim 1, wherein the thermoplastic polymer is a polyoxymethylene homopolymer or copolymer, polycarbonate, polyester, polyamide, polyolefin, polymethyl methacrylate, acrylonitrile-butadiene-styrene polymer (ABS), acrylate-butadiene-acrylonitrile (ASA), polyphenylene ether, polyarylene ether sulfones, polyarylene ether ketones or polyimides, or mixtures thereof.

3. A process as claimed in claim 1 or 2, wherein iron oxide pigments having a spinel or inverse spinel structure or mixtures thereof are employed.

4. A process as claimed in claims 1 to 3, wherein the inorganic sub-group metal salt employed is a salt of copper, silver or gold.

5. A process as claimed in claims 1 to 4, wherein the source of the high-energy radiation is an Nd:YAG laser having a wavelength of 1064 nm operating by the deflection method.

6. A process as claimed in claims 1 to 4, wherein the source of high-energy radiation is a frequency-doubled Nd:YAG laser having a wavelength of 532 nm.

7. A process as claimed in claims 1 to 4, wherein the source of high-energy radiation is an excimer laser operating by the mask process.

8. An inscribed molding, semi-finished product or finished part obtainable by a process as claimed in claims 1 to 7.

## Revendications

1. Procédé de marquage de corps façonnés à base de polymères thermodurcissables ou thermoplastiques ou de mélanges de ces polymères comprenant jusqu'à 70% en poids, par rapport au poids total des composants, d'autres additifs et agents auxiliaires de traitement, au moyen d'un rayonnement à haute énergie, caractérisé en ce que, comme additif pour améliorer la capacité de marquage, on met en oeuvre un pigment noir inorganique à base d'oxyde de fer et en supplément un sel inorganique de métal des groupes secondaires.

2. Procédé suivant la revendication 1, caractérisé en ce que, comme polymère thermoplastique, on met en oeuvre un homopolymère ou copolymère de polyoxyméthylène, du polycarbonate, du polyester, du polyamide, de la polyoléfine, du polyméthacrylate de méthyle, du polymère d'acrylonitrile-butadiène-styrène (ABS), de l'ester acrylique-butadiène-acrylonitrile (ASA), de l'éther de polyphénylène, des polyarylène-éthersulfones, des polyarylèneéthercétones ou des polyimides ou leurs mélanges.

3. Procédé suivant l'une des revendications 1 et 2, caractérisé en ce que des pigments d'oxyde de fer avec structure de spinelle ou de spinelle inverse ou leurs mélanges sont mis en oeuvre.

4. Procédé suivant l'une des revendications 1 à 3, caractérisé en ce qu'on met en oeuvre, comme sel inorganique de métal des groupes secondaires, des sels du cuivre, de l'argent ou de l'or.

5. Procédé suivant l'une des revendications 1 à 4, caractérisé en ce que, comme source du rayonnement à haute énergie, on met en oeuvre un laser Nd:YAG ayant une longueur d'ondes de 1064 nm, qui fonctionne selon le procédé de déviation.

6. Procédé suivant l'une des revendications 1 à 4, caractérisé en ce que, comme source du rayonnement à haute énergie, on met en oeuvre un laser Nd:YAG à doublement de fréquence ayant une longueur d'ondes de 532 nm.

7. Procédé suivant l'une des revendications 1 à 4, caractérisé en ce que, comme source du rayonnement à haute énergie, on met en oeuvre un laser excimère qui fonctionne selon le procédé à trame de masquage.

8. Corps façonnés, demi-produits et pièces finies marqués, que l'on peut obtenir selon le procédé suivant l'une des revendications 1 à 7.
